# EUROPÄISCHE PATENTSCHRIFT

(11) **EP 3 330 733 B1**
(45) Veröffentlichungstag und Bekanntmachung des Hinweises auf die Patenterteilung: **14.07.2021**
(21) Anmeldenummer: 17202549.6
(22) Anmeldetag: 20.11.2017
(51) Int. Cl.: G01S 13/931, H01Q 1/32, H01Q 17/00, H01Q 1/42, G01S 7/02, H01Q 1/52

(54) **RADARSENSOR FÜR EIN FAHRZEUG UND VERFAHREN ZUM ZUSAMMENBAU EINES RADAR-SENSORS**
RADAR SENSOR FOR A VEHICLE AND METHOD FOR ASSEMBLING A RADAR SENSOR
CAPTEUR RADAR POUR UN VÉHICULE ET PROCÉDÉ D'ASSEMBLAGE D'UN CAPTEUR RADAR

(30) Priorität: 05.12.2016 DE 102016123439
(43) Veröffentlichungstag der Anmeldung: 06.06.2018
(73) Patentinhaber: Valeo Schalter und Sensoren GmbH, 74321 Bietigheim-Bissingen (DE)
(72) Erfinder: Sickinger, Frank, 74321 Bietigheim-Bissingen (DE); Seybold, Marco, 74321 Bietigheim-Bissingen (DE)
(74) Vertreter: Withopf, Kristina

(56) Entgegenhaltungen:
- EP-A1- 1 762 860
- DE-A1- 19 941 931
- DE-C1- 19 739 298
- Holgerh Meinel: "2016-08- 13Technical/Barbecuemeeting AutomotiveRadar fromcomforttosafetyandbeyond -thepotentialsandtheobstaclesontheroad tomakeithappen", , 13 August 2016 (2016-08-13), XP55684751, Retrieved from the Internet: URL:http://www.mfi-ev.de/2016/2016-08-13_I ET-Ulm.pdf [retrieved on 2020-04-09]

## Beschreibung

### Technisches Gebiet

Die Erfindung betrifft einen Radarsensor für ein Fahrzeug, aufweisend wenigstens ein Radarsensorgehäuse, in dem wenigstens eine Radarantenne angeordnet ist, wobei das Radarsensorgehäuse wenigstens ein Grundgehäuseteil mit einer Einbauseite wenigstens für die wenigstens eine Radarantenne und ein Radom aufweist, mit dem die Einbauseite verschlossen ist und durch welches beim Betrieb des Radarsensors von der wenigstens einen Radarantenne gesendete Signale und/oder zu empfangene Signale hindurch treten können, wobei das Radarsensorgehäuse eine Mehrzahl von elastischen Klammerelementen aufweist, mit denen das Radom an dem wenigstens einen Grundgehäuseteil befestigt ist.

Ferner betrifft die Erfindung ein Verfahren zum Zusammenbau eines Radarsensors für ein Fahrzeug.

### Stand der Technik

Aus der EP 1 762 860 A1 ist eine Radareinrichtung für ein Kraftfahrzeug bekannt. Die Radareinrichtung umfasst ein Gehäuse, das ein erstes Gehäuseteil und ein zweites Gehäuseteil aufweist, Sender- und Empfängermittel, mindestens ein Trägerteil, an dem die Sender- und Empfängermittel angebracht sind. Das mindestens eine Trägerteil ist zwischen dem ersten Gehäuseteil und dem zweiten Gehäuseteil klemmend festgelegt. Die Radareinrichtung weist eine Anzahl von Befestigungsklammern auf, geeignet, eine lösbare Klemmverbindung zwischen dem ersten Gehäuseteil, dem mindestens einen Trägerteil und dem zweiten Gehäuseteil zur Verfügung zu stellen. Ähnliche Radareinrichtungen sind in DE 197 39 298 C1, DE 199 41 931 A1, EP 1 762 860 A1 und XP55684751 offenbart.

Der Erfindung liegt die Aufgabe zugrunde, einen Radarsensor und ein Verfahren der eingangs genannten Art gestalten, bei denen der Radarsensor einfacher zusammengebaut, insbesondere das Radom einfacher mechanisch an dem Grundgehäuseteil befestigt werden kann.

### Offenbarung der Erfindung

Diese Aufgabe wird erfindungsgemäß durch die Merkmale von Anspruch 1 gelöst.

Ein Radom ist bekanntermaßen eine geschlossene Schutzhülle, die Radarantennen vor äußeren mechanischen und chemischen Einflüssen wie Wind oder Regen schützt. Bei Radoms werden bekanntermaßen Materialien verwendet, die für Radarsignale besonders gut durchlässig sind.

Erfindungsgemäß ist wenigstens ein Klammerelement an dem Radom vormontiert. Das wenigstens eine Klammerelement kann so verliersicher an dem Radom angeordnet sein. Auf diese Weise kann das wenigstens eine Klammerelement gemeinsam mit dem Radom montiert werden. Mit dem in das Radom integrierte wenigstens eine Klammerelement kann ein Montageaufwand, insbesondere eine Anzahl von erforderlichen Bauteilen an einer Montagelinie, reduziert werden. Durch die Verwendung von Klammerelementen kann der Radarsensor ohne zusätzliche Schweiß-, Löt-, Klebe- und/oder Schraubprozesse aufgebaut werden. Auf diese Weise können das Radom und das wenigstens eine Grundgehäuseteil, welche auch aus unterschiedlichen Materialien bestehen können, stabil miteinander verbunden werden. Mithilfe der elastischen Klammerelemente kann eine mechanische Grundspannung realisiert werden, mit welcher die wenigstens eine Radarantenne festgeklemmt und fixiert werden kann. Vorteilhafterweise kann wenigstens eines der Klammerelemente als Federelement realisiert sein. Federelemente können elastisch ausgestaltet sein.

Erfindungsgemäß weist wenigstens ein Klammerelement Federstahl auf oder besteht daraus. Federstahl kann einfach verarbeitet werden und ist elastisch biegbar. Vorteilhafterweise kann das wenigstens eine Grundgehäuseteil Metall, insbesondere Aluminium, aufweisen oder daraus bestehen. Auf diese Weise kann ein mechanisch stabiles Radarsensorgehäuse realisiert werden.

Vorteilhafterweise kann das Radom insbesondere thermoplastischen Kunststoff, insbesondere Polybutylenterephthalat (PBT) und/oder Polyamid (PA), aufweisen oder daraus bestehen. Auf diese Weise kann das Radom für die Radarsignale durchlässig sein. Es ist insbesondere nicht erforderlich, dass sowohl das wenigstens eine Grundgehäuseteil und das Radom aus Kunststoff bestehen. Bekanntermaßen können Gehäuseteile aus Kunststoff mit der Zeit auf sie einwirkenden Drücken nachgeben. Durch die Elastizität der Klammerelemente kann dies kompensiert werden. So kann auch bei einer Verbindung von Gehäuseteilen, insbesondere einem Radom und/oder einem Grundgehäuseteil, aus Kunststoff über die Lebensdauer ein konstanter Druck aufrechterhalten werden. Mit der erfindungsgemäßen Klammerverbindung kann verhindert werden, dass sich die Verbindung zwischen dem wenigstens einen Grundgehäuseteil und dem Radom mit der Zeit lockert.

Die Erfindung kann bei einem Fahrzeug, insbesondere einem Kraftfahrzeug, verwendet werden. Vorteilhafterweise kann die Erfindung bei einem Landfahrzeug, insbesondere einem Personenkraftwagen, Lastkraftwagen, einem Bus, einem Motorrad oder dergleichen, verwendet werden. Die Erfindung kann auch bei autonomen oder wenigstens teilweise autonomen Fahrzeugen eingesetzt werden.

Der Radarsensor kann vorteilhafterweise mit wenigstens einer elektronischen Steuervorrichtung des Fahrzeugs, insbesondere einem Fahrerassistenzsystem und/oder einer Fahrwerksregelung und/oder einer Fahrer-Informationseinrichtung, verbunden oder Teil einer solchen sein. Auf diese Weise können die mit dem Radarsensor erfassten Objektdaten, insbesondere die Entfernung, Orientierung und/oder Relativgeschwindigkeit eines Objekts relativ zum Fahrzeug, an die Steuervorrichtung übermittelt und zur Beeinflussung von Fahrfunktionen, insbesondere der Geschwindigkeit, einer Bremsfunktion, einer Lenkungsfunktion und/oder einer Ausgabe eines Hinweis-und/oder Warnsignals insbesondere für den Fahrer, verwendet werden.

Vorteilhafterweise kann der Radarsensor, insbesondere die Radarantenne, zur Verwendung in einem Radarband zwischen 76 GHz und 81 GHz ausgestaltet sein. Vorteilhafterweise kann der Radarsensor, insbesondere eine Antenne auf Keramiksubstrat, zur Verwendung in einem sogenannten Automotive Radarband ausgestaltet sein. Auf diese Weise kann der Radarsensor im Automobilbereich eingesetzt werden.

Erfindungsgemäß ist eines der Klammerelemente im Bereich eines seiner Enden mit dem Radom verbunden, und in das Material des Radoms eingebettet. Auf diese Weise kann das wenigstens eine Klammerelement mit einem dem verbundenen Ende abgewandten Abschnitt mit dem wenigstens einen Grundgehäuseteil insbesondere lösbar verbunden sein oder werden.

Vorteilhafterweise kann wenigstens ein Ende des wenigstens einen Klammerelements in das Material des Radoms eingegossen sein. Auf diese Weise kann einem stabile Verbindung hergestellt werden. Das wenigstens eine Klammerelement kann bereits bei der Herstellung des Radoms nach einem Kunststoffformverfahren, insbesondere einem Spritz- und/oder Gussverfahren, in das Material des Radoms eingebettet werden.

Erfindungsgemäß weist wenigstens ein Klammerelement wenigstens eine S-förmige Biegung auf. Auf diese Weise kann das wenigstens seine Klammerelement insbesondere zum Schließen und/oder Öffnen der Klammerverbindung entsprechend elastisch gebogen werden. Im Bereich der S-förmigen Biegung kann das wenigstens eine Klammerelement dabei elastisch gestreckt werden. Nach dem Erreichen der Schließposition beziehungsweise der Öffnungsposition kann das wenigstens eine Klammerelement aufgrund seiner Rückstellkraft seine ursprüngliche Form selbsttätig wieder einnehmen. Nach dem Schließen der Klammerverbindung kann so aufgrund der Federwirkung eine entsprechende Klemmkraft erzeugt werden, mit der das Radom gegen das wenigstens eine Grundgehäuseteil und/oder gegebenenfalls gegen die wenigstens eine Radarantenne gepresst werden kann.

Bei einer weiteren vorteilhaften Ausführungsform kann wenigstens eines der Klammerelemente wenigstens einen Rastabschnitt aufweisen. Der wenigstens eine Rastabschnitt kann mit einem entsprechenden gehäuseseitigen Rastabschnitt auf Seiten des Grundgehäuseteils verrasten. Auf diese Weise kann die Klammerverbindung mittels einer Rastverbindung gesichert werden. Ferner kann eine derartige Rastverbindung lösbar ausgestaltet sein. So kann bei Bedarf, insbesondere zu Wartungszwecken, das Radarsensorgehäuse wieder geöffnet werden.

Vorteilhafterweise kann wenigstens eines der Klammerelemente eine Rastöse aufweisen. Entsprechend kann auf Seiten des Grundgehäuseteils eine entsprechende Rastnase angeordnet sein. Die gehäuseseitige Rastnase kann zum Verschließen und Sichern der Klammerverbindung in die Rastöse des wenigstens einen Klammerelements einrasten.

Bei einer weiteren vorteilhaften Ausführungsform kann wenigstens eines der Klammerelemente von außerhalb des Radarsensorgehäuses zugänglich angeordnet sein. Auf diese Weise kann das wenigstens eine Klammerelement von außen betätigt werden.

Bei einer weiteren vorteilhaften Ausführungsform kann das wenigstens eine Klammerelement wenigstens einen Betätigungsabschnitt aufweisen. In dem wenigstens einen Betätigungsabschnitt kann das wenigstens eine Klammerelement zum öffnen und/oder schließen betätigt und dabei entsprechend elastisch gebogen werden.

Erfindungsgemäß weist das wenigstens eine Klammerelement wenigstens eine S-förmige Biegung auf. Auf diese Weise kann die Biegecharakteristik des wenigstens einen Klammerelements verbessert werden.

Vorteilhafterweise kann der wenigstens eine Betätigungsabschnitt an einer S-förmigen Biegung des wenigstens einen Klammerelements angeordnet sein. Durch entsprechende Druckausübung auf die S-förmigen Biegung kann diese gestreckt und damit das wenigstens eine Klammerelement verlängert werden. So kann ein Abstand zwischen dem in dem Radom befestigten Ende und einem Befestigungsabschnitt für das Grundgehäuseteil, insbesondere einem Rastabschnitt, vergrößert werden. Der Befestigungsabschnitt kann auf diese Weise mit einen entsprechenden Befestigungsabschnitt auf Seiten des wenigstens einen Grundgehäuseteils in Verbindung gebracht werden. Insbesondere kann ein etwaiger Rastabschnitt so über einen entsprechenden gehäuseseitigen Rastabschnitt geschoben oder gestülpt werden und anschließend durch die elastische Rückstellkraft des wenigstens einen Klammerelements mit diesem eine sichere Rastverbindung eingehen.

Vorteilhafterweise kann der wenigstens eine Betätigungsabschnitt zum Angriff wenigstens eines Werkzeuges ausgestaltet sein. Auf diese Weise kann eine Krafteinwirkung auf den wenigstens ein Betätigungsabschnitt verbessert werden.

Bei einer weiteren vorteilhaften Ausführungsform können mehrere Klammerelemente bezüglich einer Zusammenbaurichtung des Radoms mit dem wenigstens einen Grundgehäuseteil umfangsmäßig verteilt angeordnet sein. Auf diese Weise kann das Radom umfangsmäßig gleichmäßiger mit dem wenigstens einen Grundgehäuseteil verbunden und gegen dieses gedrückt werden.

Bei einer weiteren vorteilhaften Ausführungsform kann das Radom wenigstens ein Klemmelement zum Fixieren wenigstens einer Radarantenne aufweisen.

Vorteilhafterweise kann das wenigstens eine Klemmelement des Radoms Teil einer Anschlussvorrichtung für wenigstens eine Radarantenne sein. Auf diese Weise kann die wenigstens eine Radarantenne mithilfe des Radoms in dem Radarsensorgehäuse fixiert werden. Die wenigstens eine Radarantenne kann bei der Montage des Radoms auf einem Grundgehäuseteil des Radarsensors automatisch mit dem entsprechenden wenigstens einen Klemmelement festgeklemmt werden. So kann in einem Arbeitsgang das Radarsensorgehäuse mit dem Radom verbunden und dabei gleichzeitig die wenigstens eine Radarantenne im Radarsensorgehäuse dauerhaft fixiert werden.

Vorteilhafterweise kann die wenigstens eine Radarantenne ein Keramiksubstrat mit wenigstens einer Radarantenne sein. Das Keramiksubstrat mit der Radarantenne kann ein plattenförmiges Keramiksubstrat aufweisen, welches wenigstens ein elektrisches/elektronisches Funktionsbauteil trägt.

Vorteilhafterweise kann der Radarsensor wenigstens eine Anschlussvorrichtung für die wenigstens eine Radarantenne aufweisen.

Vorteilhafterweise kann die wenigstens eine Anschlussvorrichtung wenigstens eine Einrichtung zur Fixierung der wenigstens einen Radarantenne insbesondere an einer Leiterplatte aufweisen. Vorteilhafterweise kann die wenigstens eine Einrichtung zur Fixierung wenigstens ein Klemmelement einer Klemmeinrichtung zur Fixierung der wenigstens einen Radarantenne aufweisen.

Ferner kann die wenigstens eine Anschlussvorrichtung wenigstens eine elektrische Kontakteinrichtung zum elektrischen Anschluss des wenigstens einen elektrischen/elektronischen Funktionsbauteils insbesondere mit der Leiterplatte aufweisen. Vorteilhafterweise kann die wenigstens eine elektrische Kontakteinrichtung wenigstens ein wenigstens abschnittsweise elastisches elektrisches Kontaktelement aufweisen mit wenigstens einem Kontaktabschnitt zur elektrischen Kontaktierung wenigstens eines elektrischen Kontaktbereichs aufseiten der wenigstens einen Radarantenne.

Die wenigstens eine Radarantenne kann rein mechanisch gegen wenigstens einen Kontaktabschnitt wenigstens eines elektrischen Kontaktelements der Anschlussvorrichtung gedrückt und mit der wenigstens einen Klemmeinrichtung fixiert werden. Mit der wenigstens einen Klemmeinrichtung kann die wenigstens eine Radarantenne gegen verrutschen insbesondere in einer Ebene fixiert werden und gleichzeitig können die elektrischen Kontakte mit dem wenigstens einen Kontaktabschnitt sichergestellt werden. Der wenigstens eine Kontaktabschnitt kann eine elektrisch leitende Oberfläche aufweisen, welche mit einer elektrisch leitenden Oberfläche des wenigstens einen elektrischen Kontaktbereichs aufseiten der wenigstens einen Radarantenne elektrisch leitend in Kontakt treten kann. Die elektrische Kontaktierung kann alleine durch mechanischen Druck sichergestellt werden. Auf zusätzliche Klebeprozesse und Lötprozesse beim Anschluss der wenigstens einen Radarantenne kann verzichtet werden.

Vorteilhafterweise kann das wenigstens eine Kontaktelement wenigstens abschnittsweise elastisch sein. Auf diese Weise kann es elastisch verformt, insbesondere gebogen, werden. So können etwaige bauteilbedingte, montagebedingte und/oder betriebsbedingte Toleranzen besser ausgeglichen werden. Ferner kann so das wenigstens eine Kontaktelement insbesondere zu Montagezwecken elastisch verformt werden.

Vorteilhafterweise können die Oberflächen des wenigstens einen Kontaktelements außerhalb des wenigstens einen Kontaktabschnitts elektrisch leitend oder nicht elektrisch leitend, insbesondere isolierend beschichtet, sein.

Vorteilhafterweise kann das Keramiksubstrat mit der Radarantenne als ebene, insbesondere rechteckige, Platte realisiert sein. Auf diese Weise kann es platzsparend realisiert werden.

Vorteilhafterweise kann das Keramiksubstrat eine relative Dielektrizitätskonstante εᵣ von etwa zwischen 7 und 8 aufweisen. Auf derartigen Keramiksubstraten können Strukturen einer Radarantenne wesentlich kleiner ausgeführt werden als auf üblichen Softsubstraten mit typischen relativen Dielektrizitätskonstanten εᵣ von etwa 3.

Vorteilhafterweise kann das Keramiksubstrat aus Mehrlagenkeramik, insbesondere Niedertemperatur-Einbrand-Keramik, ausgestaltet sein. Niedertemperatur-Einbrand-Keramiken sind im englischsprachigen bekannt als Low Temperature Cofired Ceramics (LTCC). Derartige Keramiksubstrat können einfach und kostengünstig hergestellt werden.

Die Anschlussvorrichtung kann ermöglichen, dass die wenigstens eine Radarantenne, insbesondere das Keramiksubstrat, mit seiner Rückseite, welcher einer Abstrahlseite der Radarantenne abgewandt ist, zu benachbarten Bauteilen beabstandet sein kann und/oder mit entsprechenden Funktionsbauteilen bestückt sein kann. Die Abstrahlseite der wenigstens einen Radarantenne ist die Seite, von der Radarsignale abgestrahlt werden und auf die reflektierte Radar-Echosignale gestrahlt werden.

Das wenigstens eine elektrische/elektronische Funktionsbauteil, welches von der wenigstens einen Radarantenne, insbesondere dem Keramiksubstrat, getragen wird, kann vorteilhafterweise wenigstens ein Sende- und/oder Empfangsbauteil und/oder wenigstens eine Antenne oder eine Antennenstruktur oder dergleichen aufweisen oder daraus bestehen. Auf diese Weise kann die wenigstens eine Radarantenne wesentliche Funktionen zum Senden und/oder Empfangen von Radarsignalen tragen.

Vorteilhafterweise kann auf der Abstrahlseite der wenigstens einen Radarantenne wenigstens eine Antennenstruktur angeordnet sein. Auf diese Weise kann die Antennenstruktur nahezu frei von Abdeckungen abstrahlen und/oder empfangen.

Vorteilhafterweise kann an der Rückseite der wenigstens einen Radarantenne wenigstens ein Empfangs- und/oder Sendebauteil, insbesondere ein Radar-TRX (Transceiver und Receiver)-Chip, angeordnet sein. Auf diese Weise können die Funktionsbauteile, welche nicht direkt zur Abstrahlung oder zum Empfang von Radarsignalen eingesetzt werden, platzsparend auf der Rückseite der wenigstens einen Radarantenne angeordnet werden. Insgesamt können dank der Anschlussvorrichtung beide Oberflächen der wenigstens einen Radarantenne zum Tragen von entsprechenden Funktionsbauteilen verwendet werden.

Vorteilhafterweise kann auf oder hinter der Rückseite der wenigstens einen Radarantenne wenigstens ein Absorberelement angeordnet sein. Mit dem Absorberelement können insbesondere elektromagnetisch Signale, insbesondere Radarsignale und/oder andere Störsignale, gedämpft und/oder abgeschirmt werden.

Vorteilhafterweise kann wenigstens ein Absorberelement zwischen der wenigstens einen Radarantenne und der Leiterplatte angeordnet sein. So kann einerseits die wenigstens eine Radarantenne vor Störsignalen geschützt werden. Andererseits können die Leiterplatte und dortige elektronische Bauteile vor etwa rückwärts abgestrahlten Radarsignalen der wenigstens einen Radarantenne geschützt werden.

Vorteilhafterweise kann wenigstens ein Absorberelement auf der der wenigstens einen Radarantenne zugewandten Oberfläche der Leiterplatte angeordnet, insbesondere aufgeklebt, sein. Auf diese Weise kann die Rückseite der wenigstens einen Radarantenne freigehalten werden für etwaige Funktionsbauteile.

Vorteilhafterweise können auf der Leiterplatte Bauteile insbesondere zur Signalverarbeitung und/oder Spannungsversorgung angeordnet sein. Auf diese Weise kann der Radarsensor mit einer eigenen Signalverarbeitung und/oder Spannungsversorgung ausgestattet sein.

Vorteilhafterweise kann wenigstens ein insbesondere elektrisches/elektronisches Bauteil auf einer der wenigstens einen Radarantenne abgewandten Oberfläche der Leiterplatte angeordnet sein. Auf diese Weise kann ein Raum zwischen der wenigstens einen Radarantenne und der Leiterplatte freigehalten werden oder mit anderen Elementen, insbesondere gegebenenfalls einem Absorberelement, versehen werden.

Vorteilhafterweise kann die Leiterplatte eine sogenannte FR4-Leiterkarte sein. Derartige Leiterkarten können eine im Vergleich insbesondere zu marktbekannten Leiterplatten aus Hartpappe größere mechanische Eigenstabilität aufweisen. FR4 (flame retardant class 4) bezeichnet bekanntermaßen eine Klasse von schwer entflammbaren und flammenhemmenden Verbundstoffen bestehend aus Epoxidharz und Glasfasergewebe.

Vorteilhafterweise kann wenigstens ein Kontaktabschnitt wenigstens eines Kontaktelements zwischen einer Zusammenbauposition und einer Kontaktposition bewegbar sein. Auf diese Weise kann der wenigstens eine Kontaktabschnitt zum Zusammenbau der wenigstens einen Radarantenne und der Anschlussvorrichtung in eine Zusammenbauposition gebracht werden. In der Zusammenbauposition kann der wenigstens eine Kontaktabschnitt so angeordnet sein, dass er den Zusammenbau nicht behindert. Sobald sich die Radarantenne in der korrekten Montageposition befindet, kann der wenigstens eine Kontaktabschnitt aus seiner Zusammenbauposition in seine Kontaktposition bewegt werden. In der Kontaktposition kontaktiert der wenigstens eine Kontaktabschnitt wenigstens einen entsprechenden Kontaktbereich auf Seiten der wenigstens einen Radarantenne.

Vorteilhafterweise kann das wenigstens eine Kontaktelement in seiner Zusammenbauposition und/oder seiner Kontaktposition eine elastische mechanische Vorspannung aufweisen. Auf diese Weise kann eine entsprechende Rückstellkraft realisiert werden zum Rückstellen des wenigstens einen Kontaktelements in die jeweils andere Position. Je nach Richtung der Rückstellkraft kann eine Montage und/oder Demontage des Radarsensors, insbesondere ein Einbau und/oder Ausbau der wenigstens einen Radarantenne, vereinfacht werden. Mit einer mechanischen Vorspannung in der Kontaktposition des wenigstens einen Kontaktelements kann eine elektrische Kontaktierung verbessert werden.

Vorteilhafterweise kann wenigstens ein Kontaktelement wenigstens einen Betätigungsabschnitt aufweisen, mit dem das wenigstens eine Kontaktelement zum Wechsel wenigstens eines Kontaktabschnitts des Kontaktelements aus einer Kontaktposition in eine Zusammenbauposition oder umgekehrt bewegt werden kann. An dem wenigstens einen Betätigungsabschnitt kann das wenigstens eine Kontaktelement entsprechend betätigt werden. Hierzu kann insbesondere ein entsprechendes Werkzeug eingesetzt werden. Zum Einlegen der wenigstens einen Radarantenne kann der wenigstens eine Kontaktabschnitt durch Betätigung an dem wenigstens einen Betätigungsabschnitt zur Einbauseite hin bewegt werden. Sobald die Betätigung des wenigstens einen Kontaktelements beendet wird, insbesondere das Werkzeug entfernt wird, kann der wenigstens eine Kontaktabschnitt insbesondere aufgrund einer mechanischen Rückstellkraft des wenigstens einen Kontaktelements selbsttätig in seine Kontaktposition bewegt werden.

Vorteilhafterweise kann das wenigstens eine Kontaktelement in wenigstens einer Lagerstelle gelagert sein. Wenigstens ein Betätigungsabschnitt und wenigstens ein Kontaktabschnitt können sich auf gegenüberliegenden Seiten der wenigstens einen Lagerstelle befinden. Durch Druck auf den wenigstens einen Betätigungsabschnitt kann der wenigstens eine Kontaktabschnitt ähnlich einem Hebel entsprechend bewegt werden.

Vorteilhafterweise kann wenigstens eine Lagerstelle zwei gegenüberliegende Lagerelemente, insbesondere Haltestäbe, aufweisen. Zwischen den Lagerelementen kann das wenigstens eine Kontaktelement beidseitig insbesondere verschiebbar gelagert werden.

Vorteilhafterweise kann wenigstens ein Kontaktelement zwischen zwei Lagerstellen gelagert sein. Wenigstens ein Betätigungsabschnitt kann sich zwischen den beiden Lagerstellen befinden. Wenigstens ein Kontaktabschnitt kann sich in einem Bereich außerhalb der beiden Lagerstellen befinden.

Vorteilhafterweise kann ein dem wenigstens einen Kontaktabschnitt abgewandtes Ende des wenigstens einen Kontaktelements an der Leiterplatte fixiert und/oder elektrisch kontaktiert sein. Auf diese Weise kann durch entsprechende Wahl der Lagerstellen und entsprechende Anordnung des wenigstens einen Betätigungsabschnitts relativ zu den Lagerstellen der wenigstens eine Kontaktabschnitt um das fixierte Ende des wenigstens einen Kontaktelements zum Wechseln zwischen der Zusammenbauposition und der Kontaktposition geschwenkt und/oder gebogen werden.

Vorteilhafterweise kann wenigstens ein Kontaktelement mit wenigstens einem Kontaktabschnitt an wenigstens einer Plattenfläche der wenigstens einen Radarantenne elektrisch kontaktierend angreifen. Als Plattenflächen im Sinne der Erfindung werden die beiden gegenüberliegenden ausgedehnten Oberflächen der Radarantenne, insbesondere des plattenförmigen Keramiksubstrats mit der Radarantenne, bezeichnet. An der wenigstens einen Plattenfläche kann der wenigstens eine Kontaktabschnitt derart angreifen, dass das Strahlungsfeld der Radarantenne bezüglich der Abstrahlrichtung in azimutaler Richtung weniger, vorzugsweise nicht, gestört wird.

Vorteilhafterweise kann wenigstens ein Kontaktabschnitt an einer bezüglich einer Zusammenbaurichtung der wenigstens einen Radarantenne und der wenigstens einen Anschlussvorrichtung vorderen Plattenfläche, insbesondere der Rückseite, der wenigstens einen Radarantenne elektrisch leitend angreifen. Auf diese Weise schränkt die Kontaktierung die entsprechend andere Plattenfläche, insbesondere die Abstrahlseite, nicht ein. Alternativ oder zusätzlich kann wenigstens ein Kontaktabschnitt an einer hinteren Plattenfläche, insbesondere der Abstrahlseite, der wenigstens einen Radarantenne elektrisch leitend angreifen. Alternativ oder zusätzlich kann wenigstens ein Kontaktabschnitt an einer vorderen Plattenfläche der wenigstens einen Radarantenne und wenigstens ein Kontaktabschnitt kann an einer hinteren Plattenfläche angreifen. Auf diese Weise können beide Seiten der wenigstens einen Radarantenne für entsprechende elektrische Kontaktierung genutzt werden.

Vorteilhafterweise kann wenigstens ein Kontaktelement wenigstens zwei Kontaktfinger aufweisen, welche auf gegenüberliegenden Plattenflächen der wenigstens einen Radarantenne angreifen können und/oder zwei Kontaktelemente können jeweils wenigstens einen Kontaktfinger aufweisen, welche auf gegenüberliegenden Plattenflächen der wenigstens einen Radarantenne angreifen können. Auf diese Weise können die Kontaktfinger die wenigstens eine Radarantenne gabelartig umgreifen.

Vorteilhafterweise können die Kontaktfinger im Bereich eines Randes der wenigstens einen Radarantenne angreifen. So können die Kontaktfinger den Rand der wenigstens einen Radarantenne umgreifen. Die Kontaktfinger können so eine laterale Positionierung und/oder Fixierung der wenigstens einen Radarantenne weiter verbessern.

Vorteilhafterweise kann wenigstens ein Kontaktfinger wenigstens einen Kontaktabschnitt aufweisen zum elektrischen Kontaktieren wenigstens eines entsprechenden Kontaktbereichs auf Seiten der wenigstens einen Radarantenne. Vorteilhafterweise können beide Kontaktfinger jeweils einen Kontaktabschnitt aufweisen. So kann auf beiden Plattenflächen des s jeweils eine entsprechende Kontaktierung stattfinden. Alternativ kann lediglich einer der Kontaktfinger eines Kontaktfinger-Paares einen Kontaktabschnitt bilden oder aufweisen. In diesem Fall kann der jeweils andere Kontaktfinger lediglich als Gegenlager dienen.

Bei einer Ausführungsform, bei der wenigstens ein Kontaktelement wenigstens zwei Kontaktfinger aufweist, welche auf gegenüberliegenden Plattenflächen angreifen können, können beide Kontaktfinger durch entsprechende Betätigung des wenigstens einen Kontaktelements aus einer Zusammenbauposition in eine Kontaktposition oder umgekehrt bewegt werden.

Bei einer Ausführungsform, bei der zwei Kontaktelemente jeweils wenigstens einen Kontaktfinger aufweisen, kann einer der Kontaktfinger durch entsprechende Betätigung des entsprechenden Kontaktelements aus einer Zusammenbauposition in eine Kontaktposition oder umgekehrt bewegt werden. Die beiden Kontaktfinger können so unabhängig voneinander betätigt werden. So kann eine Montage und/oder Demontage des Radarsensors weiter vereinfacht werden.

Vorteilhafterweise kann wenigstens ein elektrisches Kontaktelement einen Federarm aufweisen, welcher an einem freien Ende wenigstens einen Kontaktfinger mit wenigstens einem Kontaktabschnitt aufweisen kann. Mit einem Federarm können entsprechende Abstände zwischen einem Verbindungsende insbesondere auf Seiten der Leiterplatte und wenigstens einem Kontaktabschnitt insbesondere am freien Ende des Federarms überbrückt werden.

Vorteilhafterweise kann das wenigstens eine elektrische Kontaktelement elektrisch leitendes Material aufweisen. Auf diese Weise kann das wenigstens eine elektrische Kontaktelement als elektrischer Leiter wirken. Zusätzlich oder alternativ kann das wenigstens eine elektrische Kontaktelement elastisches Material aufweisen. Auf diese Weise kann das wenigstens eine Kontaktelement elastisch bewegt, insbesondere geformt, gebogen oder dergleichen, werden.

Vorteilhafterweise kann das wenigstens eine elektrische Kontaktelement aus elektrisch leitendem, elastischem Material sein. So können die elektrisch leitenden Eigenschaften mit den elastischen Eigenschaften kombiniert werden. Vorteilhafterweise kann das wenigstens eine elektrische Kontaktelement aus Metall, insbesondere Federstahl, sein.

Vorteilhafterweise kann wenigstens ein Anschlussgrundkörper der Anschlussvorrichtung wenigstens einen Teil wenigstens eines Kontaktelements und/oder wenigstens ein Klemmelement der wenigstens einen Klemmeinrichtung wenigstens mitbilden und/oder halten. Mit dem wenigstens einen Anschlussgrundkörper kann die Anschlussvorrichtung mechanisch und/oder elektrisch insbesondere mit der Leiterplatte verbunden sein oder werden.

Vorteilhafterweise kann wenigstens ein Anschlussgrundkörper länglich sein. Auf diese Weise kann er entlang einer Längsseite oder Querseite der wenigstens einen Radarantenne angeordnet werden.

Vorteilhafterweise kann die Anschlussvorrichtung wenigstens eine Anschlussleiste aufweisen oder daraus bestehen. Die Anschlussleiste kann wenigstens einen Anschlussgrundkörper mit wenigstens einem Kontaktelement und wenigstens einem Klemmelement umfassen. An einer länglichen Anschlussleiste können mehrere Kontaktelemente und/oder Klemmelemente nebeneinander angeordnet sein.

Vorteilhafterweise kann wenigstens ein Kontaktelement in und/oder auf und/oder an wenigstens einem Anschlussgrundkörper gelagert sein. Auf diese Weise kann das wenigstens eine Kontaktelement gehalten, positioniert und zwischen seiner Kontaktposition und seiner Zusammenbauposition bewegt werden.

Vorteilhafterweise kann die Anschlussvorrichtung, gegebenenfalls wenigstens ein Anschlussgrundkörper, wenigstens eine Führung für wenigstens ein Werkzeug zur Betätigung wenigstens eines Betätigungsabschnitts wenigstens eines Kontaktelements aufweisen. Auf diese Weise kann die Anschlussvorrichtung, insbesondere das wenigstens eine Kontaktelement, zur Montage und/oder Demontage einfacher betätigt werden.

Vorteilhafterweise kann wenigstens ein Klemmelement einer Zusammenbaurichtung der wenigstens einen Radarantenne und der Anschlussvorrichtung entgegen gerichtet sein und/oder wenigstens ein Klemmelement kann in einer Zusammenbaurichtung der Radarantenne und der Anschlussvorrichtung gerichtet sein. Auf diese Weise kann das wenigstens eine Klemmelement direkt an einer Plattenfläche der wenigstens einen Radarantenne angreifen. So kann eine Klemmkraft besser in die wenigstens eine Radarantenne, insbesondere das Keramiksubstrat, eingeleitet werden.

Vorteilhafterweise kann wenigstens ein Klemmelement auf der in Zusammenbaurichtung der Radarantenne mit der Anschlussvorrichtung vorderen Plattenfläche, insbesondere der Rückseite, an der wenigstens einen Radarantenne angreifen und/oder wenigstens ein Klemmelement kann auf der hinteren Plattenfläche, insbesondere der Abstrahlseite, an der wenigstens einen Radarantenne angreifen.

Vorteilhafterweise können zwei Klemmelemente auf in Zusammenbaurichtung gegenüberliegenden Seiten an der wenigstens einen Radarantenne angreifen. Auf diese Weise kann die wenigstens eine Radarantenne zwischen den beiden Klemmelementen eingeklemmt werden.

Vorteilhafterweise kann wenigstens ein Klemmelement gegebenenfalls an wenigstens einem Anschlussgrundkörper angeordnet sein. Auf diese Weise kann es gemeinsam mit wenigstens einer Kontakteinrichtung realisiert werden. Alternativ oder zusätzlich kann wenigstens ein Klemmelement an einem Teil des Radarsensorgehäuses angeordnet sein. Auf diese Weise kann das wenigstens eine Klemmelement beim Zusammenbau des Radarsensorgehäuses automatisch gegen die wenigstens eine Radarantenne gepresst werden.

Vorteilhafterweise kann wenigstens ein erstes Klemmelement an wenigstens einem Anschlussgrundkörper und wenigstens ein dem ersten Klemmelement zugeordnetes zweites Klemmelement an dem Radarsensorgehäuse angeordnet sein. Auf dem wenigstens einen ersten Klemmelement kann die wenigstens eine Radarantenne beim Zusammenbau abgelegt werden. Anschließend kann beim Schließen des Radarsensorgehäuses die wenigstens eine Radarantenne mit dem wenigstens einen zweiten Klemmelement festgeklemmt werden.

Vorteilhafterweise kann wenigstens ein Kontaktelement und/oder wenigstens ein Teil der Klemmeinrichtung und/oder gegebenenfalls wenigstens ein Anschlussgrundkörper an der Leiterplatte angeordnet, insbesondere an dieser befestigt und mit dieser elektrisch verbunden, sein.

Vorteilhafterweise kann wenigstens ein Kontaktelement und/oder wenigstens ein Teil der Klemmeinrichtung und/oder gegebenenfalls wenigstens ein Anschlussgrundkörper mittels einer Lötverbindung oder einer anderen Bestückungsmethode mit der Leiterplatte verbunden sein.

Vorteilhafterweise kann eine Verbindung des Radoms mit dem Grundgehäuseteil so ausgestaltet sein, dass sie eine mechanische Vorspannung zum Festklemmen der Radarantenne bereitstellt. Auf diese Weise können montagebedingte, betriebsbedingte und/oder bauteilbedingte Toleranzen insbesondere im Bereich des Radarsensorgehäuses besser kompensiert werden.

Vorteilhafterweise kann jeweils wenigstens ein Klemmelement und/oder wenigstens ein Kontaktelement, insbesondere ein Anschlussgrundkörper, gegenüberliegend angeordnet sein. Auf diese Weise kann die wenigstens eine Radarantenne an gegenüberliegenden Rändern elektrisch kontaktiert und/oder fixiert werden.

Vorteilhafterweise kann gegenüberliegend jeweils wenigstens ein Klemmelement und wenigstens ein Kontaktelement, insbesondere wenigstens ein Anschlussgrundkörper, angeordnet sein.

Vorteilhafterweise kann wenigstens ein Anschluss für externe Signal- und/oder Stromversorgungsleitungen aus dem Radarsensorgehäuse herausführen. Mit dem wenigstens einen Anschluss können Signal- und/oder Stromversorgungsleitungen des Radarsensors mit entsprechenden externen Leitungen verbunden werden.

Vorteilhafterweise kann der wenigstens eine Anschluss ein elektrischer Anschluss sein. Auf diese Weise können interne elektrische Leitungen und externe elektrische Leitungen miteinander verbunden werden.

Vorteilhafterweise kann der wenigstens eine Anschluss in normaler Einbauorientierung des Radarsensors räumlich unten an dem Radarsensorgehäuse angeordnet sein. Auf diese Weise kann die Gefahr des Eindringen von Feuchtigkeit und Wasser in den Anschluss und/oder das Radarsensorgehäuse verringert werden.

Vorteilhafterweise kann der wenigstens eine Anschluss mit einer Schnellverbindung, insbesondere als Stecker und/oder Buchse, realisiert sein. Auf diese Weise kann der wenigstens eine Anschluss einfach mit entsprechenden externen Leitungsanschlüssen verbunden werden.

Ferner wird die technische Aufgabe erfindungsgemäß bei dem Verfahren dadurch gelöst, dass wenigstens ein Teil wenigstens einer Anschlussvorrichtung für ein Keramiksubstrat mit einer Radarantenne an einer Leiterplatte angeordnet und mit entsprechenden elektrischen Leitungen elektrisch verbunden wird, die Leiterplatte in einem Grundgehäuseteil eines Radarsensorgehäuses des Radarsensors angeordnet wird, das Keramiksubstrat mit der Radarantenne auf wenigstens einem Klemmelement der wenigstens einen Anschlussvorrichtung auf Seiten der Leiterplatte positioniert wird und mit einer elektrischen Kontakteinrichtung der Anschlussvorrichtung elektrisch kontaktiert wird, ein Radom auf das Grundgehäuseteil montiert und dabei mit wenigstens einem Klemmelement der wenigstens Anschlussvorrichtung auf Seiten des Radoms das Keramiksubstrat mit der Radarantenne gegenüber dem wenigstens einen Klemmelement der wenigstens einen Anschlussvorrichtung auf Seiten der Leiterplatte festgeklemmt wird und das Radom an dem Grundgehäuseteil mittels einer Mehrzahl von elastischen Klammerelementen fixiert wird. Erfindungsgemäß wird die elektrische Kontaktierung zwischen dem Keramiksubstrat mit der Radarantenne und der Leiterplatte beim Positionieren des Keramiksubstrats auf der wenigstens einen Anschlussleitung realisiert. Die Fixierung des Keramiksubstrats wird automatisch beim Anbau des Radoms Mithilfe der elastischen Klammerelemente realisiert.

Bei einer vorteilhaften Ausgestaltung des Verfahrens kann wenigstens ein Klammerelement zum Schließen einer Rastverbindung mit dem Grundgehäuseteil elastisch gestreckt und so mit einer mechanischen elastischen Vorspannung versehen werden, mit welcher das Radom und das Grundgehäuseteil zusammengepresst werden. Durch die mechanische elastische Vorspannung kann darüber hinaus eine Klemmkraft zwischen den Klemmelementen der wenigstens einen Anschlussvorrichtung erhöht werden. So kann eine Fixierung und eine elektrische Kontaktierung des Keramiksubstrats mit der Radarantenne im Radarsensorgehäuse verbessert werden. Die Fixierung und die elektrische Kontaktierung des Keramiksubstrats mit der Radarantenne erfolgt dabei automatisch beim Verschließen des Radarsensorgehäuses.

Vorteilhafterweise kann wenigstens ein elektrisches Kontaktelement der elektrischen Kontakteinrichtung vor dem Positionieren des Keramiksubstrats mit der Radarantenne auf dem wenigstens einen Klemmelement der wenigstens einen Anschlussvorrichtung auf Seiten der Leiterplatte in eine Zusammenbauposition gebracht werden und das wenigstens eine elektrische Kontaktelement kann nach dem Positionieren des Keramiksubstrats mit der Radarantenne in eine Kontaktposition gebracht werden. Auf diese Weise kann das wenigstens eine elektrische Kontaktelement zum Zusammenbau freigegeben und nach dem Einbau des Keramiksubstrats mit der Radarantenne mit dieser elektrisch kontaktiert werden.

Im Übrigen gelten die im Zusammenhang mit dem erfindungsgemäßen Radarsensor und dem erfindungsgemäßen Verfahren und deren jeweiligen vorteilhaften Ausgestaltungen aufgezeigten Merkmale und Vorteile untereinander entsprechend und umgekehrt. Die einzelnen Merkmale und Vorteile können selbstverständlich untereinander kombiniert werden, wobei sich weitere vorteilhafte Wirkungen einstellen können, die über die Summe der Einzelwirkungen hinausgehen.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch
- Figur 1: eine isometrischer Darstellung eines Radarsensors mit einem Radarsensorgehäuse, in dem ein Keramiksubstrat mit einer Radarantenne mit zwei Anschlussleisten gemäß einem ersten Ausführungsbeispiel an eine Leiterplatte des Radarsensors angeschlossen ist;
- Figur 2: eine Draufsicht auf den Radarsensor der Figur 1, wobei ein Radom des Radarsensors transparent gezeigt ist;
- Figur 3: einen Schnitt durch die Leiterplatte und das Keramiksubstrat mit der Radarantenne des Radarsensors aus den Figuren 1 und 2 im Bereich eine der Anschlussleisten;
- Figur 4: einen Schnitt durch das Radarsensorgehäuse des Radarsensors aus den Figuren 1 bis 3 im Bereich einer Klemmverbindung zwischen dem Radom und einen Grundgehäuseteil;
- Figur 5: einen Schnitt durch eine Leiterplatte und ein Keramiksubstrat mit einer Radarantenne eines Radarsensors im Bereich einer Anschlussleiste gemäß einem zweiten Ausführungsbeispiel.

In den Figuren sind gleiche Bauteile mit gleichen Bezugszeichen versehen.

### Ausführungsform(en) der Erfindung

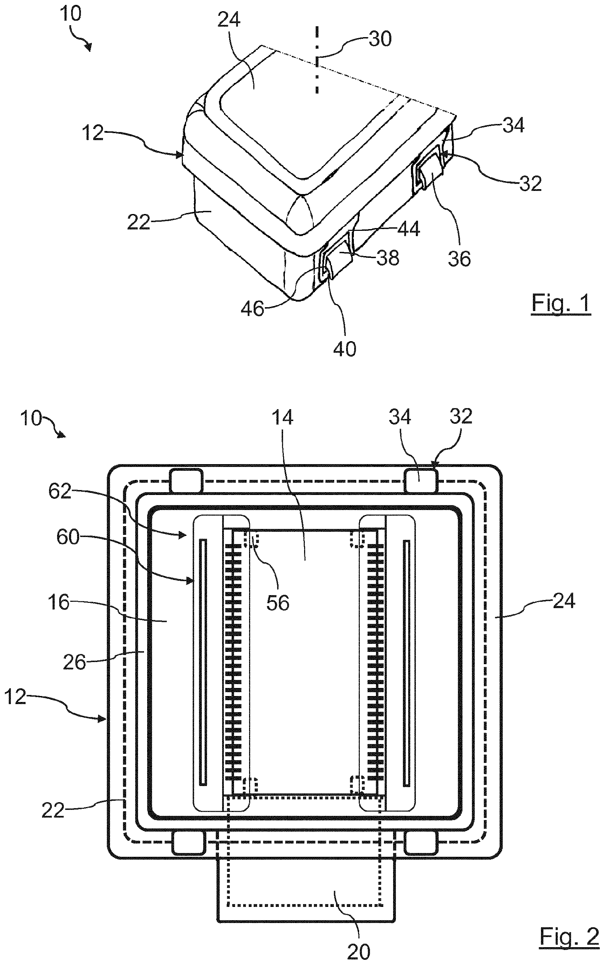

In den Figuren 1 bis 4 ist ein Radarsensor 10 in unterschiedlichen Darstellungen gezeigt. Der Radarsensor 10 kann beispielsweise in Verbindung mit einem Fahrerassistenzsystem eines Kraftfahrzeugs Verwendung finden.

Der Radarsensor 10 umfasst ein öffenbares Radarsensorgehäuse 12, in dem ein Keramiksubstrat 90 mit einer Radarantenne 14 und eine Leiterplatte 16 mit Bauteilen 18 zur Signalverarbeitung und Spannungsversorgung angeordnet sind. Ferner verfügt der Radarsensor 10 über einen Anschlussstecker 20, welcher aus dem Radarsensorgehäuse 12 herausführt und über den entsprechende Signalleitungen und Stromversorgungsleitungen angeschlossen werden können.

Das Radarsensorgehäuse 12 ist aus einem Grundgehäuseteil 22 und einem Radom 24 zusammengesetzt. Das Grundgehäuseteil 22 ist beispielsweise aus Aluminium. Das Radom 24 ist aus Kunststoff, beispielsweise PBT.

Das Radarsensorgehäuse 12 hat insgesamt etwa die Form eines Quaders. Dabei haben das Grundgehäuseteil 22 und das Radom 24 jeweils die Form einer etwa quaderförmigen Wanne. Das Radom 24 ist auf einen Rand einer Umfangswand des Grundgehäuseteils 22 gesteckt. Eine Umfangswand 28 des Radoms 24 umgreift die Umfangswand des Grundgehäuseteils 22.

Das Grundgehäuseteil 22 weist eine Einbauseite 26 mit einer Einbauöffnung auf. Durch die Einbauöffnung können bei beim Zusammenbau des Radarsensors 10 das Keramiksubstrat 90 mit der Radarantenne 14 und die Leiterplatte 16 eingebaut werden. Die Einbauseite 26 ist mit dem Radom 24 öffenbar verschlossen. Zum Zusammenbau werden das Grundgehäuseteil 22 das Keramiksubstrat 90 mit der Radarantenne 14, die Leiterplatte 16 und das Radom 24 parallel zu einer gedachten Montageachse 30 zusammengesetzt.

Das Radom 24 ist mittels insgesamt vier im wesentlichen identische Klammerverbindungen 32 an dem Grundgehäuseteil 22 fixiert. Das Radom 24 wird mit den Klammerverbindungen 32 parallel zur Montageachse 30 gegen den Rand der Umfangswand des Grundgehäuseteils 22 gedrückt. Die Klammerverbindungen 32 befinden sich auf gegenüberliegenden Längsseiten des Radarsensorgehäuses 12. Dabei sind jeweils zwei der Klammerverbindungen 32 auf der gleichen Längsseite des Radarsensorgehäuses 12 angeordnet.

Jede Klammerverbindung 32 umfasst ein elastisches Klammerelement 34 aufseiten des Radoms 24 und eine Rastnase 36 aufseiten des Grundgehäuseteils 22.

Die Rastnasen 36 befinden sich an der äußeren Umfangsseite des Grundgehäuseteils 22 und erheben sich bezüglich der Montageachse 30 nach radial außen. Jede der Rastnasen 36 weist auf ihrer der Einbauseite 26 zugewandten Seite eine keilartige Schräge 38 auf. Auf der der Einbauseite 26 abgewandten Seite verfügt jede Rastnase 36 über eine Rastnut 40.

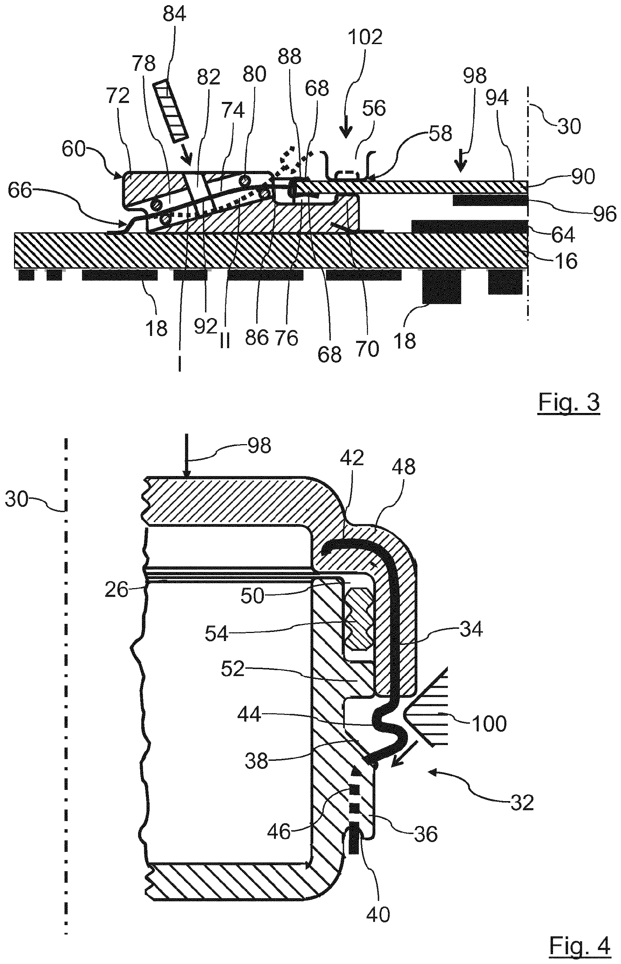

Die Klammerelemente 34 sind jeweils elastische Federelemente beispielsweise aus Federstahl. Die Klammerelemente 34 werden im Folgenden anhand des Klammerelements 34 aus der Figur 4 näher erläutert.

Im Bereich eines seiner Enden 42 weist das Klammerelement 34 eine Biegung etwa um 90° auf. Der Abschnitt des Klammerelements 34 im Be reich dieser Biegung ist in die Umfangswand 28 des Radoms 24 eingebettet. Das Klammerelement 34 erstreckt sich im Bereich seines Endes 42 vor der 90°-Biegung bezü glich der Montageachse 30 nach radial innen in einen deckelseitigen Absatz 48 des Radoms 24. Auf der dem Ende 42 abgewandten Seite der 90°-Biegung erstreckt sich das Klammerelement 34 grob etwa parallel zur Montageachse 30.

Das Klammerelement 34 verfügt in seinem etwa parallel zur Montageachse 30 verlaufenden Mittelteil über eine S-förmige Biegung 44. Die S-förmige Biegung 44 befindet sich in einem Bereich außerhalb des Materials der Umfangswand 28. Die S-förmige Biegung 44 befindet sich in montiertem Zustand etwa auf Höhe der keilartigen Schräge 38 der entsprechenden Rastnase 36. Ein Biegeabschnitt der S-förmigen Biegung 44, welcher der Umfangswand 28 des Radoms 24 zugewandt ist, erhebt sich zur Umfangswand des Grundgehäuseteils 22 hin. Ein Biegeabschnitt der S-förmigen Biegung 44, welcher der Umfangswand 28 des Radoms 24 abgewandt ist, erhebt sich von der Umfangswand des Grundgehäuseteils 22 weg nach außen.

Zwischen der S-förmigen Biegung 44 und einem freien Ende des Klammerelements 34 weist das Klammerelement 34 eine Rastöse 46 auf. Die Rastöse 46 hat die Form eines rechteckigen Fensters. Die Innenabmessungen der Rastöse 46 sind etwas größer als die entsprechenden Außenabmessungen der Rastnase 36. So kann die Rastöse 46 von außen über die Rastnase 36 geführt werden. In der Figur 4 sind der besseren Verständlichkeit wegen die eigentlich durch die Rastnase 36 verdeckten Seitenbegrenzungen der Rastöse 46 gestrichelt angedeutet.

Der deckelseitige Absatz 48 bildet eine vom Radom 24 axial zur Montageachse 30 betrachtet hintere Begrenzung einer Dichtungsnut 50. Die Dichtungsnut 50 erstreckt sich bezüglich der Montageachse 30 umfangsmäßig entlang der äußeren Umfangsseite des Grundgehäuseteils 22 und umgibt die Einbauseite 26.

Auf der dem deckelseitigen Absatz 48 bezüglich der Montageachse 30 axial gegenüberliegenden Seite wird die Dichtungsnut 50 vorne von einem Vorsprung 52 des Grundgehäuseteils 22 begrenzt. Der Vorsprung 52 erstreckt sich bezüglich der Montageachse 30 umfangsmäßig an der äußeren Umfangsseite des Grundgehäuseteils 22. Der Vorsprung 52 befindet sich axial zur Montageachse 30 betrachtet zwischen der Einbauseite 26 und der Rastnase 36.

Die Dichtungsnut 50 wird auf ihrer bezüglich der Montageachse 30 radial inneren Seite von der Umfangswand des Grundgehäuseteils 22 begrenzt. Auf der radial äußeren Seite wird die Dichtungsnut 50 von der Umfangswand 28 des Radoms 24 begrenzt. Die Umfangswand 28 überlappt den Vorsprung 22. Die Umfangswand 28 liegt mit ihrer bezüglich der Montageachse 30 radial inneren Umfangsseite an der radial äußeren Umfangsseite des Vorsprung 22 an.

In der Dichtungsnut 50 ist eine bezüglich der Montageachse 30 umfangsmäßige zusammenhängende Dichtung 54 in radialer Richtung dichtend angeordnet.

Das Radom 24 weist ferner insgesamt vier gehäuseseitige Klemmelemente 56 einer Klemmeinrichtung 58 zum festklemmen des Keramiksubstrats 90 mit der Radarantenne 14 auf. Die gehäuseseitigen Klemmelemente 56 sind in der Figur 2, in der das Radom 24 der besseren Übersichtlichkeit wegen transparent dargestellt ist, und der Figur 3 gezeigt. Die gehäuseseitigen Klemmelemente 56 sind an der dem Grundgehäuseteil 22 zugewandten inneren Deckenseite des Radoms 24 angeordnet. Bei den gehäuseseitigen Klemmelementen 56 handelt es sich jeweils um etwa quaderförmige Podeste, welche sich in Richtung der Montageachse 30 betrachtet von der Deckenseite des Radoms 24 weg erstrecken. Jeweils zwei der gehäuseseitigen Klemmelemente 56 befinden sich im Bereich der gleichen Umfangsseite der Umfangswand 28, an der auch jeweilige Klammerelemente 34 angeordnet sind. Die gehäuseseitigen Klemmelemente 56 befinden sich in der Projektion betrachtet etwa zwischen den jeweiligen benachbarten Klammerelementen 34.

Der Anschlussstecker 20 führt durch eine Umfangsseite des Radarsensorgehäuses 12 zwischen den dortigen Klammerverbindungen 32 nach außen. Im Inneren des Radarsensorgehäuses 12 ist der Anschlussstecker 20 elektrisch und mechanisch mit der Leiterplatte 16 verbunden. In der üblichen räumlichen Betriebsorientierung des Radarsensors 10, welche in der Figur 2 gezeigt ist, befindet sich der Anschlussstecker 20 räumlich unten. Auf diese Weise ist er gegen das Eindringen von Feuchtigkeit und Wasser besser geschützt.

Bei der Leiterplatte 16 handelt es sich um eine sogenannte FR4-Leiterkarte. Beispielhaft ist die Leiterplatte 16 als rechteckige ebene Platte ausgestaltet. Sie ist in hier nicht weiter interessierender Weise in dem Grundgehäuse 22 so befestigt, dass sich ihre gegenüberliegenden Oberflächen jeweils senkrecht zur Montageachse 30 erstrecken. Die Bauteile 18 zur Signalverarbeitung und Spannungsversorgung sind auf der der Einbauseite 26 abgewandten Oberfläche der Leiterplatte 16 montiert und mit entsprechenden Leiterbahnen elektrisch verbunden.

Auf der der Einbauseite 26 zugewandten Oberfläche der Leiterplatte 16 sind zwei längliche Anschlussleisten 60 einer Anschlussvorrichtung 62 gemäß einem ersten Ausführungsbeispiel angeordnet. Die Anschlussvorrichtung 62 dient dem mechanischen und elektrischen Anschluss des Keramiksubstrats 90 mit der Radarantenne 14. Die Anschlussleisten 60 verlaufen, wie in der Figur 2 gezeigt, parallel zueinander und erstrecken sich jeweils zwischen denjenigen Umfangsseiten des Radarsensorgehäuses 12, an denen die jeweiligen Klammerverbindungen 32 angeordnet sind. Ein Ausschnitt der Leiterplatte 16 mit einer der der Anschlussleisten 60 ist in der Figur 3 im Schnitt gezeigt. Die Anschlussleisten 60 sind mechanisch mit der Leiterplatte 16 und elektrisch mit entsprechenden Leiterbahnen der Leiterplatte 16 verbunden.

Zwischen den beiden Anschlussleisten 60 ist ein in der Figur 3 angedeuteter Absorberelement 64 flächig an der entsprechenden Oberfläche der Leiterplatte 16 befestigt, beispielsweise aufgeklebt. Das Absorberelement 64 dient zur Dämpfung von elektromagnetischer Strahlung.

Der Aufbau der beiden Anschlussleisten 60 ist im Wesentlichen identisch. Im Folgenden wird der Aufbau anhand der Anschlussleiste 60 aus der Figur 3 näher erläutert.

Die Anschlussleiste 60 verfügt über eine elektrische Kontakteinrichtung 66 zur elektrischen Kontaktierung entsprechender elektrischer Kontaktbereiche 68 aufseiten des Keramiksubstrats 90 mit der Radarantenne 14. Ferner umfasst die Anschlussleiste 60 ein anschlussseitiges Klemmelement 70 der Klemmeinrichtung 58. Darüber hinaus weist die Anschlussleiste 60 einen länglichen Anschlussgrundkörper 72 auf, an dem das anschlussseitige Klemmelement 70 einstückig realisiert ist und in welchem eine Mehrzahl von elektrischen Kontaktelementen 74 der Kontakteinrichtung 66 gelagert sind.

Der Anschlussgrundkörper 72 ist aus elektrisch isolierendem Material. Er erstreckt sich zwischen den Umfangsseiten des Radarsensorgehäuses 12. Auf einer Längsseite, die der anderen Anschlussleiste 60 der Anschlussvorrichtung 62 zugewandt ist, befindet sich das anschlussseitige Klemmelement 70. Das anschlussseitige Klemmelement 70 erhebt sich podestartig von der Leiterplatte 16 weg und über die gesamte Länge des Anschlussgrundkörpers 72.

Auf der dem anderen Anschlusskörper 72 abgewandten Seite des anschlussseitigen Klemmelements 70 ist eine Vertiefung 76 angeordnet. Die Vertiefung 76 ist auf ihrer der Leiterplatte 16 abgewandten Seite offen. Sie erstreckt sich nahezu über die gesamte Länge des Anschlussgrundkörpers 72.

Neben der Vertiefung 76 erhebt sich ein Podest, in dem sich ein Führungsspalt 78 für die elektrischen Kontaktelemente 78 befindet. Der Führungsspalt 78 erstreckt sich einerseits nahezu über die gesamte Länge des Anschlussgrundkörpers 72. Andererseits verbindet der Führungsspalt 78 eine der anderen Anschlussleiste 60 abgewandte Rückseite des Anschlussgrundkörpers 72 mit der Vertiefung 76. Auf der Rückseite des Anschlusskörpers 72 öffnet sich der Führungsspalt 78 auf der der Leiterplatte 16 zugewandten Seite.

Im Bereich einer Öffnung des Führungsspalts 78 zur Vertiefung 76 und der Öffnung zur Rückseite ist jeweils ein Paar von Haltestäben 80 zur Positionierung und Lagerung der elektrischen Kontaktelemente 74 angeordnet. Die Haltestäbe 80 erstrecken sich parallel zueinander entlang des Anschlussgrundkörpers 72. Die Haltestäbe 80 sind aus elektrisch isolierendem Material.

Durch die der Leiterplatte 16 abgewandte Oberseite des Podestes des Anschlussgrundkörpers 62 führt eine Werkzeugaufnahme 82. Die Werkzeugaufnahme 82 führt in den Führungsspalt 78. Die Werkzeugaufnahme 82 hat die Form eines langgestreckten Spaltes, der sich in Längsrichtung des Führungsspalts 78 über diesen hinaus erstreckt. Die Werkzeugaufnahme 82 dient zur Aufnahme und Führung eines externen Werkzeugs 84 zur Betätigung der Kontaktelemente 74.

Die elektrische Kontakteinrichtung 66 verfügt über eine Vielzahl von elektrischen Kontaktelementen 74, welche nebeneinander entlang des Anschlussgrundkörpers 72 in dem Führungsspalt 78 angeordnet sind. Die elektrischen Kontaktelemente 74 sind untereinander nicht in elektrischen Kontakt. Die Kontaktelemente 74 des gezeigten Ausführungsbeispiels sind im Wesentlichen identisch aufgebaut. Jedes Kontaktelement 74 besteht aus einem länglichen elastischen elektrischen Leiter, beispielsweise eine Metallfeder.

Im Folgenden werden die Kontaktelemente 74 anhand des in Figur 3 gezeigten Kontaktelements 74 näher erläutert. Das Kontaktelement 74 erstreckt sich durch die beiden Öffnungen des Führungsspalts 78. Das Kontaktelement 74 ist zwischen den entsprechenden Haltestäben 80 der beiden Haltestab-Paare gelagert. Mit einem Ende ist das Kontaktelement 74 beispielsweise mittels einer Lötverbindung elektrisch und mechanisch mit einem entsprechenden elektrisch leitenden Bereich der Leiterplatte 16 verbunden. An dem freien Ende ist das Kontaktelement 74 außerhalb des Führungsspalts 78 mit einem Kontaktarm 86 ausgestattet. Der Kontaktarm 86 geht an seinem Ende in zwei gabelförmig angeordnete Kontaktfinger 88 über.

In einer in der Figur 3 angedeuteten Kontaktposition I des Kontaktarms 86 umgreifen die Kontaktfinger 88 einen Rand des Keramiksubstrats 90 auf in Richtung der Montageachse 30 betrachtet gegenüberliegenden Seiten.

Das Kontaktelement 74 weist ferner einen Betätigungsabschnitt 92 auf. Der Betätigungsabschnitt 92 befindet sich zwischen dem Kontaktarm 86 und dem an der Leiterplatte 16 befestigten Ende des Kontaktelements 74. Der Betätigungsabschnitt 92 ist innerhalb des Führungsspalts 78 im Bereich der Werkzeugaufnahme 82 angeordnet. An dem Betätigungsabschnitt 92 kann das Werkzeug 84 angreifen und damit den Kontaktarm 86 aus der Kontaktposition I in eine Zusammenbauposition II bewegen. Die Zusammenbauposition II des Kontaktarms 86 ist in der Figur 3 gestrichelt angedeutet. In der Zusammenbauposition II sind die Kontaktfinger 88 von der Leiterplatte 16 weg in Richtung der Einbauseite 26 gebogen. Die Gabel, welche durch die Kontaktfinger 88 gebildet ist, ist in der Zusammenbauposition II bereit zur Aufnahme des Keramiksubstrats 90.

Das Keramiksubstrat 90 hat beispielhaft die Form einer rechteckigen Platte. Das Keramiksubstrat 90 ist aus Mehrlagenkeramik, beispielsweise LTCC, gebildet. Die der Einbauseite 26 des Grundgehäuseteils 22 zugewandte Plattenfläche des Keramiksubstrats 90 bildet eine Abstrahlseite 94 für die Radarantenne 14. Im Bereich der Abstrahlseite 94 weist das Keramiksubstrat 90 entsprechende, in den Figuren nicht näher bezeichnete Antennenstrukturen auf. Außerdem befinden sich im Bereich der den Anschlussleisten 60 zugewandten Längsrändern an auf der Abstrahlseite 94 ein Teil der elektrischen Kontaktbereiche 68, welche den in der Figur 3 oberen Kontaktfingern 88 der jeweiligen Kontaktelementen 74 zugeordnet sind.

Auf der der Abstrahlseite 94 abgewandten Rückseite des Keramiksubstrats 90 sind im Bereich der Längsränder des Keramiksubstrats 90 weitere elektrische Kontaktbereiche 68 angeordnet, welche den in der Figur 3 unteren Kontaktfingern 88 der entsprechenden Kontaktelemente 74 zugeordnet sind. Des Weiteren ist auf der Rückseite des Keramiksubstrats 90 ein Radar-TRX-Chip 96 angeordnet und entsprechend elektrisch kontaktiert. Der Radar-TRX-Chip 96 weist einen Sender und einen Empfänger für entsprechende Radarsignale auf. Der Radar-TRX-Chip 96 ist in dem freien Bereich zwischen dem Keramiksubstrat 90 und der Leiterplatte 16 angeordnet. Der Radar-TRX-Chip 96 befindet sich zwischen den Anschlussleisten 60.

Zur Herstellung des Radarsensors 10 werden das Grundgehäuseteil 22, das Radom 24, die Leiterplatte 16 mit den Anschlussleisten 60 und dem Anschlussstecker 22 und das Keramiksubstrat 90 mit der Radarantenne 14 jeweils vormontiert.

Die Leiterplatte 16 wird mit ihrer die Bauteile 18 tragenden Seite voran in einer Zusammenbaurichtung 98, welche in der Figur 3 durch einen Pfeil angedeutet ist, parallel zur Montageachse 30 in das Grundgehäuseteil 22 eingebaut und dort fixiert.

Anschließend wird in die Werkzeugaufnahmen 82 der beiden Anschlussleisten 60 jeweils eines der Werkzeuge 84 gesteckt. Damit werden die Kontaktelemente 74 gegen ihre elastische Rückstellkraft in ihre Zusammenbauposition II bewegt.

Das Keramiksubstrat 90 mit der Radarantenne 14 wird mit der der Abstrahlseite 94 abgewandten Rückseite voran in Zusammenbaurichtung 98 zwischen den Anschlussleisten 60 so platziert, dass die jeweiligen Längsränder in den Gabeln der Kontaktfinger 88 der entsprechenden Kontaktelemente 74 zu liegen kommen.

Die Werkzeuge 84 werden aus den Werkzeugaufnahmen 82 entfernt, wodurch sich die Kontaktelemente 74 aufgrund ihrer elastischen Rückstellkraft in ihre jeweilige Kontaktposition I bewegen. Dabei werden zwischen den Kontaktfingern 88 und den jeweiligen Kontaktbereichen 68 des Keramiksubstrats 90 jeweilige elektrische Kontakte hergestellt. Das Keramiksubstrat 90 liegt in der korrekten Einbauposition auf den anschlussseitigen Klemmelementen 70, auf gegenüberliegenden Seiten gelagert, auf.

Danach wird das Radom 24 unter Zwischenlage der Dichtung 54 in Zusammenbaurichtung 98 auf das Grundgehäuseteil 22 gesteckt. Dabei werden die entsprechenden freien Enden der Klammerelemente 34 jeweils über die keilartigen Schrägen 38 der Rastnasen 36 geführt. Mit einem Verschlusswerkzeug 100, welches in der Figur 4 angedeutet ist, werden die Klammerelemente 34 an ihren S-förmigen Biegungen 44 zur Umfangswand des Grundgehäuseteils 22 gedrückt, wodurch die jeweiligen Rastösen 46 über die Rastnasen 36 gleiten. Nach Entfernen des Verschlusswerkzeugs 100 verrasten die Klammerelemente 34 aufgrund der elastischen Rückstellkraft der Klammerelemente 34 in den entsprechenden Rastnuten 40 der Rastnasen 36.

Durch die elastische Vorspannung der Klammerelemente 34 wird das Radom 24 in Richtung der Montageachse 30 gegen den Rand des Grundgehäuseteils 22 gedrückt. Die gehäuseseitigen Klemmelemente 56 drücken dabei gegen die Abstrahlseite 94 des Keramiksubstrats 90. Die gehäuseseitigen Klemmelemente 56 befinden sich jeweils gegenüber des entsprechenden anschlussseitigen Klemmelements 70. Mit den gehäuseseitigen Klemmelementen 56 wird eine Klemmkraft, in der Figur 3 angedeutet durch einen Pfeil 102, ausgeübt, mit der das Keramiksubstrat 90 und damit die Radarantenne 14 zwischen den gehäuseseitigen Klemmelementen 56 und den jeweiligen anschlussseitigen Klemmelementen 70 eingeklemmt wird.

Zum Ausbau des Keramiksubstrats 90 mit der Radarantenne 14 werden Verrastungen der Klammerverbindung 32 mithilfe des Verschlusswerkzeugs 100 gelöst. Das Radom 24 wird entgegen der Zusammenbaurichtung 98 von dem Grundgehäuseteil 22 entfernt. Die Werkzeuge 84 werden in die jeweiligen Werkzeugaufnahmen 82 gesteckt, sodass die Kontaktelemente 74 in ihre Zusammenbauposition II bewegt werden. Das Keramiksubstrat 90 mit der Radarantenne 14 wird anschließend entgegen der Zusammenbaurichtung 98 entnommen.

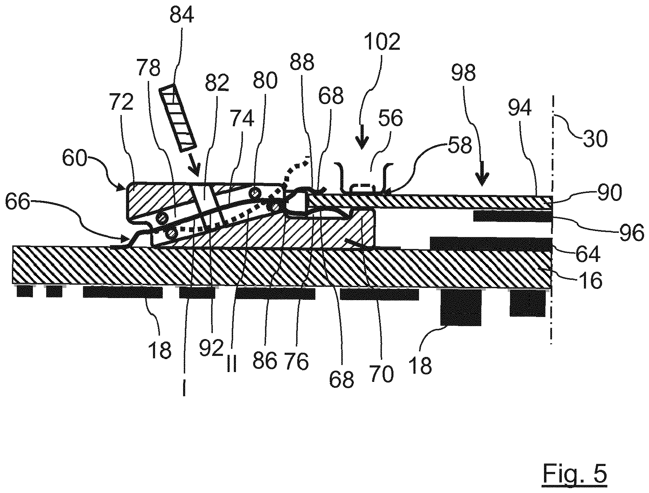

In der Figur 5 ist ein Radarsensor 10 mit einer Anschlussvorrichtung 62 gemäß einem zweiten Ausführungsbeispiel gezeigt. Diejenigen Elemente, die zu denen des ersten Ausführungsbeispiels aus den Figuren 1 bis 4 ähnlich sind, sind mit denselben Bezugszeichen versehen. Das zweite Ausführungsbeispiel unterscheidet sich von dem ersten Ausführungsbeispiel dadurch, dass beim zweiten Ausführungsbeispiel jedes Kontaktelement 74 jeweils nur einen Kontaktfinger 88 aufweist. Lediglich der in Zusammenbaurichtung 98 hintere, der Leiterplatte 16 abgewandte Kontaktfinger 88 ist aus einer Kontaktposition I in eine Zusammenposition II und umgekehrt bewegbar. Der entsprechend andere Kontaktfinger 88 ist auf der der Leiterplatte 16 zugewandten Seite fest angeordnet

## Patentansprüche

1. Radarsensor (10) für ein Fahrzeug, aufweisend wenigstens ein Radarsensorgehäuse (12), in dem wenigstens eine Radarantenne (14) angeordnet ist, wobei das Radarsensorgehäuse (12) wenigstens ein Grundgehäuseteil (22) mit einer Einbauseite (26) wenigstens für die wenigstens eine Radarantenne (14) und ein Radom (24) aufweist, mit dem die Einbauseite (26) verschlossen ist und durch welches beim Betrieb des Radarsensors (10) von der wenigstens einen Radarantenne (14) gesendete Signale und/oder zu empfangene Signale hindurch treten können, wobei das Radarsensorgehäuse (12) eine Mehrzahl von elastischen Klammerelementen (34) aufweist, mit denen das Radom (24) an dem wenigstens einen Grundgehäuseteil (22) befestigt ist, wobei wenigstens eines der Klammerelemente (34) mit dem Radom (24) fest verbunden ist, wobei das wenigstens eine Klammerelement (34) im Bereich eines seiner Enden (42) mit dem Radom (24) verbunden ist, **dadurch gekennzeichnet, dass** das wenigstens eine Klammerelement (34) Federstahl aufweist oder daraus besteht, dass das wenigstens eine Klammerelemente (34) im Bereich eines seiner Enden (42) in das Material des Radoms (24) eingebettet ist, und dass das wenigstens eine Klammerelement (34) wenigstens eine S-förmige Biegung (44) aufweist, so dass das wenigstens eine Klammerelement (34) entsprechend elastisch gebogen werden kann.

2. Radarsensor nach Anspruch 1, **dadurch gekennzeichnet, dass** wenigstens ein Ende (42) des wenigstens einen Klammerelements (34) in das Material des Radoms (24) eingegossen ist.

3. Radarsensor nach einem der vorigen Ansprüche, **dadurch gekennzeichnet, dass** wenigstens eines der Klammerelemente (34) wenigstens einen Rastabschnitt (46) aufweist.

4. Radarsensor nach Anspruch 3, **dadurch gekennzeichnet, dass** der wenigstens eine Rastabschnitt (46) mit einem entsprechenden gehäuseseitigen Rastabschnitt (36) des Grundgehäuseteils (22) verrasten kann.

5. Radarsensor nach einem der vorigen Ansprüche, **dadurch gekennzeichnet, dass** wenigstens eines der Klammerelemente (34) von außerhalb des Radarsensorgehäuses (12) zugänglich angeordnet ist.

6. Radarsensor nach einem der vorigen Ansprüche, **dadurch gekennzeichnet, dass** das wenigstens eine Klammerelement (34) wenigstens einen Betätigungsabschnitt aufweist.

7. Radarsensor nach Anspruch 6, **dadurch gekennzeichnet, dass** in dem Betätigungsabschnitt das wenigstens eine Klammerelement (34) zum Öffnen und/oder Schließen betätigt und dabei entsprechend elastisch gebogen werden kann.

8. Radarsensor nach Anspruch 6 oder 7, **dadurch gekennzeichnet, dass** der wenigstens eine Betätigungsabschnitt an der S-förmigen Biegung (44) des wenigstens einen Klammerelements (34) angeordnet ist.

9. Radarsensor nach einem der vorhergehenden Ansprüche, **dadurch gekennzeichnet, dass** durch entsprechende Druckausübung auf die S-förmige Biegung (44) diese gestreckt werden kann und damit das wenigstens eine Klammerelement (34) verlängert werden kann, so dass ein Abstand zwischen dem in dem Radom (24) befestigten Ende des Klammerelements (34) und einem gehäuseseitigen Rastabschnitt (36) des Grundgehäuseteils (22) vergrößert werden kann.

10. Radarsensor nach einem der vorhergehenden Ansprüche, **dadurch gekennzeichnet, dass** der Rastabschnitt (46) über einen entsprechenden gehäuseseitigen Rastabschnitt (36) des Grundgehäuseteils (22) geschoben oder gestülpt werden kann und anschließend durch die elastische Rückstellkraft des wenigstens einen Klammerelements (34) mit diesem eine sichere Rastverbindung eingehen kann.

11. Radarsensor nach einem der vorigen Ansprüche, **dadurch gekennzeichnet, dass** mehrere Klammerelemente (34) bezüglich einer Zusammenbaurichtung (98) des Radoms (24) mit dem Grundgehäuseteil (22) umfangsmäßig verteilt angeordnet sind.

12. Radarsensor nach einem der vorigen Ansprüche, **dadurch gekennzeichnet, dass** das Radom (24) wenigstens ein Klemmelement (56) zum Fixieren wenigstens einer Radarantenne (14) aufweist.

13. Radarsensor nach einem der vorigen Ansprüche, **dadurch gekennzeichnet, dass** das Radom (24) thermoplastischen Kunststoff, insbesondere Polybutylenterephthalat (PBT) und/oder Polyamid (PA), aufweist oder daraus besteht.

14. Radarsensor nach einem der vorigen Ansprüche, **dadurch gekennzeichnet, dass** das wenigstens eine Klammerelement (34) im Bereich eines seiner Enden eine Biegung etwa um 90° aufweist, wobei der Abschnitt des Klammerelements (34) im Bereich dieser Biegung in eine Umfangswand (28) des Radoms (24) eingebettet ist.

## Claims

1. Radar sensor (10) for a vehicle, having at least one radar sensor housing (12), in which at least one radar antenna (14) is arranged, wherein the radar sensor housing (12) has at least one basic housing part (22) with an installation side (26) at least for the at least one radar antenna (14), and a radome (24) with which the installation side (26) is closed and through which signals transmitted by the at least one radar antenna (14) and/or signals to be received can pass during the operation of the radar sensor (10), wherein the radar sensor housing (12) has a plurality of elastic clamp elements (34) with which the radome (24) is attached to the at least one basic housing part (22), wherein at least one of the clamp elements (34) is fixedly connected to the radome (24), wherein the at least one clamp element (34) is connected in the region of one of its ends (42) to the radome (24), **characterized in that** the at least one clamp element (34) includes or consists of spring steel, **in that** the at least one clamp element (34) in the region of one of its ends (42) is embedded in the material of the radome (24), and **in that** the at least one clamp element (34) has at least one S-shaped curvature (44), so that the at least one clamp element (34) can be correspondingly elastically bent.

2. Radar sensor according to Claim 1, **characterized in that** at least one end (42) of the at least one clamp element (34) is moulded into the material of the radome (24) .

3. Radar sensor according to either of the preceding claims, **characterized in that** at least one of the clamp elements (34) has at least one latch section (46).

4. Radar sensor according to Claim 3, **characterized in that** the at least one latch section (46) can latch together with a corresponding housing-side latch section (36) of the basic housing part (22).

5. Radar sensor according to one of the preceding claims, **characterized in that** at least one of the clamp elements (34) is arranged to be accessible from outside the radar sensor housing (12).

6. Radar sensor according to one of the preceding claims, **characterized in that** the at least one clamp element (34) has at least one actuating section.

7. Radar sensor according to Claim 6, **characterized in that** the at least one clamp element (34) can be actuated in the actuating section for opening and/or closing and can be correspondingly elastically bent in the process.

8. Radar sensor according to Claim 6 or 7, **characterized in that** the at least one actuating section is arranged at the S-shaped curvature (44) of the at least one clamp element (34).

9. Radar sensor according to one of the preceding claims, **characterized in that**, as a result of a corresponding exertion of pressure on the S-shaped curvature (44), the latter can be stretched and the at least one clamp element (34) can thus be extended so that a distance between the end of the clamp element (34) that is attached in the radome (24) and a housing-side latch section (36) of the basic housing part (22) can be increased.

10. Radar sensor according to one of the preceding claims, **characterized in that** the latch section (46) can be pushed or put over a corresponding housing-side latch section (36) of the basic housing part (22) and subsequently form a secure latch connection with the at least one clamp element (34) due to the elastic restoring force of the latter.

11. Radar sensor according to one of the preceding claims, **characterized in that** a plurality of clamp elements (34) are arranged distributed circumferentially with respect to an assembly direction (98) of the radome (24) with the basic housing part (22).

12. Radar sensor according to one of the preceding claims, **characterized in that** the radome (24) has at least one clamp element (56) for fixing at least one radar antenna (14).

13. Radar sensor according to one of the preceding claims, **characterized in that** the radome (24) includes or consists of a thermoplastic material, in particular polybutadiene terephthalate (PBT) and/or polyamide (PA).

14. Radar sensor according to one of the preceding claims, **characterized in that** the at least one clamp element (34) in the region of one of its ends has a curvature of approximately 90°, wherein the section of the clamp element (34) in the region of that curvature is embedded in a circumferential wall (28) of the radome (24).

## Revendications

1. Capteur radar (10) destiné à un véhicule et comportant au moins un boîtier de capteur radar (12) dans lequel au moins une antenne radar (14) est disposée, le boîtier de capteur radar (12) comportant au moins une partie de boîtier de base (22), pourvue d'un côté de montage (26) au moins destiné à au moins une antenne radar (14), et un radôme (24) qui ferme le côté de montage (26) et qui est traversé pendant le fonctionnement du capteur radar (10) par des signaux émis par l'au moins une antenne radar (14) et/ou des signaux reçus, le boîtier de capteur radar (12) comportant une pluralité d'éléments de serrage élastiques (34) permettant de fixer le radôme (24) à l'au moins une partie de boîtier de base (22), l'un au moins des éléments de serrage (34) étant relié de manière fixe au radôme (24), l'au moins un élément de serrage (34) étant relié au radôme (24) dans la région de l'une de ses extrémités (42), **caractérisé en ce que** l'au moins un élément de serrage (34) comprend de l'acier à ressort ou est en acier à ressort, **en ce que** l'au moins un élément de serrage (34) est noyé dans la matière du radôme (24) au niveau de l'une de ses extrémités (42), et **en ce que** l'au moins un élément de serrage (34) comporte au moins un coude (44) en forme de S de sorte que l'au moins un élément de serrage (34) puisse être plié élastiquement de manière correspondante.

2. Capteur radar selon la revendication 1, **caractérisé en ce qu'**au moins une extrémité (42) de l'au moins un élément de serrage (34) est coulée dans la matière du radôme (24).

3. Capteur radar selon l'une des revendications précédentes, **caractérisé en ce que** l'un au moins des éléments de serrage (34) comporte au moins une portion d'encliquetage (46).

4. Capteur radar selon la revendication 3, **caractérisé en ce que** l'au moins une portion d'encliquetage (46) peut s'encliqueter avec une portion d'encliquetage correspondante côté boîtier (36) de la partie de boîtier de base (22).

5. Capteur radar selon l'une des revendications précédentes, **caractérisé en ce que** l'un au moins des éléments de serrage (34) est disposé de manière à être accessible depuis l'extérieur du boîtier de capteur radar (12).

6. Capteur radar selon l'une des revendications précédentes, **caractérisé en ce que** l'au moins un élément de serrage (34) comporte au moins une portion d'actionnement.

7. Capteur radar selon la revendication 6, **caractérisé en ce que** l'au moins un élément de serrage (34) est actionné dans la portion d'actionnement pour l'ouverture et/ou la fermeture et peut alors être plié élastiquement de manière correspondante.

8. Capteur radar selon la revendication 6 ou 7, **caractérisé en ce que** l'au moins une portion d'actionnement est disposée sur le coude (44) en forme de S de l'au moins un élément de serrage (34).

9. Capteur radar selon l'une des revendications précédentes, **caractérisé en ce qu'**une pression appropriée exercée sur le coude (44) en forme de S permet d'étirer celui-ci et ainsi d'allonger l'au moins un élément de serrage (34) de façon à pouvoir augmenter la distance entre l'extrémité, fixée dans le radôme (24), de l'élément de serrage (34) et une portion d'encliquetage côté boîtier (36) de la partie boîtier de base (22).

10. Capteur radar selon l'une des revendications précédentes, **caractérisé en ce que** la portion de verrouillage (46) peut être poussée ou retournée sur une portion d'encliquetage correspondante côté boîtier (36) de la partie de boîtier de base (22) puis, en raison de la force de rappel élastique de l'au moins un élément de serrage (34), peut entrer dans une liaison d'encliquetage sûre avec celui-ci.

11. Capteur radar selon l'une des revendications précédentes, **caractérisé en ce que** plusieurs éléments de serrage (34) sont disposés de manière répartie circonférentiellement par rapport à une direction d'assemblage (98) du radôme (24) avec la partie de boîtier de base (22) .

12. Capteur radar selon l'une des revendications précédentes, **caractérisé en ce que** le radôme (24) comporte au moins un élément de serrage (56) destiné à la fixation d'au moins une antenne radar (14).

13. Capteur radar selon l'une des revendications précédentes, **caractérisé en ce que** le radôme (24) comprend ou est en une matière synthétique thermoplastique, notamment du téréphtalate de polybutylène (PBT) et/ou du polyamide (PA).

14. Capteur radar selon l'une des revendications précédentes, **caractérisé en ce que** l'au moins un élément de serrage (34) comporte un coude d'environ 90° dans la région de l'une de ses extrémités, la portion de l'élément de serrage (34) étant noyée dans une paroi périphérique (28) du radôme (24) dans la région de ce coude.
